# EUROPEAN PATENT APPLICATION

(11) **EP 3 798 667 A1**
(43) Date of publication of application: **31.03.2021**
(21) Application number: 20194966.6
(22) Date of filing: 08.09.2020
(51) Int. Cl.: G01S 7/41, G01S 13/88

(54) **CONTROL DEVICE OF UNATTENDED SECURITY CHECK SYSTEM DETECTING HUMAN BODY**

(30) Priority: 26.09.2019 CN 201910915565
(71) Applicant: Reach (Beijing) Technology Co., Ltd., Beijing 100192 (CN); State Nuclear Security Technology Center, Beijig 102401 (CN)
(72) Inventor: Xu, Jicai, Beijing, 100192 (CN); Liu, Yongde, Beijing, 100192 (CN); Zhao, Guohai, Beijing, 100192 (CN); Han, Yeliang, Beijing, 100192 (CN); Chen, He, Beijing, 100192 (CN); Gao, Xuemei, Beijing, 100192 (CN); Yang, Changjie, Beijing, 100192 (CN); Zhao, Zeyu, Beijing, 100192 (CN); Liu, Jun, Beijing, 100192 (CN); Liu, Tianshu, Beijing, 100192 (CN); Zhang, Min, Beijing, 100192 (CN); Luo, Yijun, Beijing, 100192 (CN); Du, Yaodong, Beijing, 100192 (CN); Wang, Hongzhe, Beijing, 100192 (CN); Tian, Wenzhu, Beijing, 100192 (CN); Chen, Lidan, Beijing, 100192 (CN); Wang, Wanqing, Beijing, 100192 (CN); Liu, Huiling, Beijing, 100192 (CN); Jiang, Nan, Beijing, 100192 (CN)
(74) Representative: Cabinet Chaillot

(57) **Abstract**

The invention provides a control device of an unattended security check system detecting human bodies, comprising a box body provided therein with a human body scanning and imaging section and a single person access control section sequentially, wherein the human body scanning and imaging section scans and detects a human body of a person entering the device with electromagnetic waves and obtains a human body image of the person, and the human body image is compared with image information preset by a main control module to determine whether the person is qualified to pass; after the main control module determines the scanning result of the human body scanning and imaging section, the single person access control section allows the person to pass or stops the person from passing through a gate machine; the human body scanning and imaging section includes a magneto-optical image recognition and scanning module, the magneto-optical image recognition and scanning module scans and detects a human body to generate complete and clear images of the front and the back of the human body by utilizing the characteristics of electromagnetic waves between the middle infrared wave and the microwave in the electromagnetic wave spectrum, the image is an X-ray image and contains information including the shape and material of items under clothes.

## Description

### Technical Field

The invention relates to the technical field of security and protection, in particular to a system integration device, combining unattended magneto-optical human body-imaging security check, radioactivity detection, and an access control gate machine, at an entrance of a controlled zone of a high-security facility.

### Background Art

The widely used security check in the prior art employs a metal detector door and a handheld metal detector for inspecting a human body, and an X-ray security machine and manual verification for inspecting luggage. The prior art has many technical defects.
1. Metal detector doors, which mostly used, can effectively identify metal items but fail to detect non-metal items, such as a ceramic cutter, powder, liquid, and colloid, as well as other dangerous and prohibited items, such as paper materials.
2. Manual inspection requires high professionalism, a sense of responsibility, and working spirits, and it's difficult to determine who is accountable for an error if anything like oversight happens.
3. The above-mentioned device cannot be integrated with a gate machine control system, unattended access control and management cannot be achieved, history of passages is not recorded, and it's also difficult to determine who is accountable for an error if anything like oversight happens; the costs of human resources can be significant because a large team of security personnel is required in a relatively large zone.

Given the defects, the prior art fails to meet the needs of the access control at an entrance of a controlled zone of a high-security facility. Therefore, a safe, reliable, efficient, and intelligent unattended human body-detection device is desirable.

### Summary of the Invention

Given the above, it's an object of the invention to solve the technical problem that the prior art security check is insufficient by providing a control device of an unattended security check system detecting human bodies.

In an aspect, the invention provides a control device of an unattended security check system detecting human bodies, comprising:
a box body, provided therein with a human body scanning and imaging section and a single person access control section sequentially, wherein
the human body scanning and imaging section scans and detects a human body of a person entering the device with electromagnetic waves and obtains a human body image of the person, and the human body image is compared with image information preset by a main control module to determine whether the person is qualified to pass;
after the main control module determines the scanning result of the human body scanning and imaging section, the single person access control section allows the person to pass or stops the person from passing through a gate machine;
the human body scanning and imaging section includes a magneto-optical image recognition and scanning module, the magneto-optical image recognition and scanning module scans and detects a human body to generate the human body image, including images of the front and the back of the human body, by utilizing the characteristics of electromagnetic waves between the middle infrared wave and the microwave in the electromagnetic wave spectrum, the human body image is an X-ray image and contains information including the shape and material of items underneath clothes, and the information of the X-ray image is sent to the main control module;
the main control module compares the information with preset determination conditions stored therein, automatically marks at a corresponding position at the human body image when finding out prohibited items, stops the person from passing, and asks the person to step back through an audio alert; if the main control module determines that the person is qualified to pass, an instruction of clear access is issued and sent to a machinery control module of the gate machine for implementation; after reception of information about whether the person passes successfully from the machinery control module of the gate machine, all the information about the person passing the security check to a security system platform.

Further, the human body scanning and imaging section is provided with a radioactivity detection module, the radioactivity detection module employs an ionizing radiation instrument for detecting whether the person carries nuclear radiation substances or substances polluted by nuclear radiation, and provides radioactivity detection data to the main control module;
the radioactivity detection module determines whether the person carries radioactive substances with radioactivity exceeding a threshold value by sensing, provides radioactivity detection data to the main control module, and generates an alarm when the radioactivity exceeds the threshold value.

Further, the magneto-optical image recognition and scanning modules can be arranged on two sides of an inner sidewall of the box body, respectively, the two scanning modules work in parallel, with one scanning from top to bottom, and the other scanning from bottom to top.

Further, comparison data are prestored in the main control module, and a determination reference model F (A, B, C, D, M) is established, wherein A represents a type of the item, B represents comparison parameters including image pigment, shape and material information, C represents an image pigment value at the same position in the image, D represents a shape of the scanned image, and M represents a material of the scanned item; the main control module sets the above determination reference database as a basis for comparison, wherein A-the type of the item is set as a metal type, a non-metal type, a radiation type, and a non-radiation type according to specific application scenarios, and in greater details as a specific metal or a specific non-metal, or as types of daily life, production, and service according to the usage of the item, the type of service being further defined as a service tool and a portable tool. Further, certain comparison parameters, including an image pigment, a shape, and a material, are set for the same reference data determination model, the scanned image can be determined according to the magneto-optical image recognition and scanning module, the pigment at any position can be subjected to comparison, and when the pigment detected in real time does not match with the reference pigment, the specific position is determined as the position to be checked; regarding the shape parameter, a shape change or a shape of a certain position is detected after imaging to basically determine the general type of the carried item, and the shape can be recorded as a three-dimensional size through a further detection; regarding the material, the main control module determines a certain material by comparing electromagnetic wave penetration thereof with electromagnetic wave penetration of the reference material. Further, when the human body and the item are scanned, the main control module sets a scanning and imaging matrix T (a, b, c, d, m), wherein *a* represents a type of the item to be detected in real time, b represents parameters for real-time comparison, including image pigment, shape and material information, c represents a real-time image pigment value at the same position in the image, d represents a shape of the image scanned in real time, and m represents a material of the real-time scanned object; the main control module compares the real-time scanning and imaging matrix T (a, b, c, d, m) with the reference model F (A, B, C, D, M) to determine whether a difference exists as to the person, thereby determining whether the person carries preset prohibited items.

Further, the device also comprises an identity recognition module provided at the foremost end of the box body for confirming the identity of the person entering or exiting the security zone, activating the magneto-optical image recognition and scanning module at the same time, combining a result information output by the activated magneto-optical image recognition and scanning module with the identity information, and sending the same to the main control module;
the identity recognition module employs any one of a card swiping mode, a fingerprint mode, an iris recognition mode, and a face recognition mode.

Further, the main control module further comprises a specific identity information storage database, when a specific person enters for the first time, human body biological characteristics Q such as any one of fingerprint data, iris data, and facial data, of the specific person are collected as a unique identifier for determining the identity of the specific person; when the person enters, real-time image information T (a, b, c, d, m) is collected and compared with the reference model F (A, B, C, D, M), a first reference model T (G, A, B, C, D, M) is determined after the person is qualified; when the person exits, the scanning and imaging matrix information T (a, b, c, d, m) of the person is collected and compared with the reference model F (A, B, C, D, M), specific person imaging matrix information T (G, a, b, c, d, m) is generated after the person is qualified, and the imaging matrix information T is compared with the first reference model T to determine whether differences exist between entrance and exit. Further, the human body scanning and imaging section is disposed at a front end, the gate machine is disposed at a rear end, a passage is provided between the human body scanning and imaging section and the gate machine, when the person passes through an identity recognition module, the magneto-optical image recognition and scanning module is activated to start scanning and detection, meanwhile, the gate machine is pre-started, when the person is not qualified yet, the gate machine blocks the passage, and after the person is qualified, the gate machine is started;
the gate machine is any one of a speed gate, an AB-interlocking gate, and a full-height revolving gate.

Further, the human body scanning and imaging section also comprises an audio broadcaster at the top of a detection section of a magneto-optical scanning section for providing help and alerts in Chinese and English during the whole process; an illuminator at the top of the detection section of the magneto-optical scanning section for providing illumination in the passage, and an indicator at the top of an entrance of the magneto-optical scanning section and electrically connected with the system for indicating different stages and abnormal conditions in the recognition process and providing visual alert signals.

Compared with the prior art, the invention has the following advantages: the invention relates to an access system control device at an entrance of a controlled zone of a high-security facility, which can control the access under an unattended condition. The invention is mainly intended for the applications of automatic personnel access control and unattended security check of items carried by a human body in facilities such as nuclear power plants, nuclear facility factories, nuclear military production units, military facilities, high-tech security R and D units, high-tech security production units, high-security design units, and high-security laboratories.

In particular, the human body scanning and imaging section and the single-person access control section are integrated. Firstly, the human body scanning and imaging section obtains a human body image with a certain precision through scanning and detecting a human body, and determines whether a person is qualified to pass through comparison with image information preset by a main control module; the gate machine can be opened to allow the person to enter or exit only after the person is qualified.

In particular, the magneto-optical image recognition and scanning module scans and detects a human body to generate a set of complete and clear images of the front and the back of the human body by utilizing the characteristics of electromagnetic waves between the middle infrared wave and the microwave in the electromagnetic wave spectrum, the imaging has a high resolution and can see underneath the clothes of the human body easily by utilizing, for example, terahertz electromagnetic waves; the shape and material information of the items underneath the clothes is obtained, and high-definition data image information is provided for the main control module. The magneto-optical image recognition and scanning module scans and detects a human body to generate a set of complete and clear images of the front and the back of the human body by utilizing the characteristics of electromagnetic waves between the middle infrared wave and the microwave in the electromagnetic wave spectrum, the imaging has a high resolution and can see underneath the clothes of the human body easily by utilizing, for example, terahertz electromagnetic waves; the shape and material information of the items underneath the clothes is obtained, and high-definition data image information is provided for the main control module.

According to the invention, by setting the pigment, direct decomposition and comparison are facilitated after imaging, and a high comparison precision is rendered; by setting the shape, the image can be conveniently obtained through electromagnetic waves; and by setting the material, specific items can be conveniently recognized in real time.

In particular, the main control module of the invention further includes a specific identity information storage database, when a specific person enters for the first time, human body biological characteristics Q such as any one of fingerprint data, iris data, and facial data, of the specific person are collected as a unique identifier for determining the identity of the specific person; when the person enters, real-time image information T (a, b, c, d, m) is collected and compared with the reference model F (A, B, C, D, M), a first reference model T (G, A, B, C, D, M) is determined after the person is qualified; when the person exits, the scanning and imaging matrix information T (a, b, c, d, m) of the person is collected and compared with the reference model F (A, B, C, D, M), specific person imaging matrix information T (G, a, b, c, d, m) is generated after the person is qualified, and the imaging matrix information T is compared with the first reference model T to determine whether differences exist between entrance and exit.

In particular, the gate machine of the invention is any one of a speed gate, an AB-interlocking gate, and a full-height revolving gate. The human body scanning and imaging section of the invention can be combined with various gates to form a one-way passage, suitable for various scenarios.

### Brief Description of the Drawings

Various other advantages and benefits will become apparent to those of ordinary skill in the art from the following detailed description of the preferred embodiments. The drawings are only for the purpose of illustrating preferred embodiments and are not to be construed as limiting the invention. Also, throughout the drawings, like reference numerals designate like parts. In the drawings:
Fig. 1 is a block schematic diagram of a structure of a security monitoring device according to an embodiment of the invention;
Fig. 2 is a schematic view showing an overall structure of the security monitoring device according to an embodiment of the invention;
Fig. 3 is a schematic view showing the overall structure of the security monitoring device according to a first embodiment of the invention;
Fig. 4 is a schematic view showing the overall structure of the security monitoring device according to a second embodiment of the invention;
Fig. 5 is a schematic view showing the overall structure of the security monitoring device according to a third embodiment of the invention.

### Detailed Description of the Invention

Exemplary embodiments of the present disclosure will be described in more detail below with reference to the accompanying drawings. While there are shown in the drawings exemplary embodiments of the present disclosure, it is to be understood that the present disclosure may be embodied in various forms and should not be limited to the embodiments set forth herein. Rather, these embodiments are provided so that this disclosure will be thorough and complete, and will fully convey the scope of the disclosure to those skilled in the art. It should be noted that embodiments of the invention and features of the embodiments may be combined with one another without conflict. The invention will now be described in detail, by way of example, with reference to the accompanying drawings.

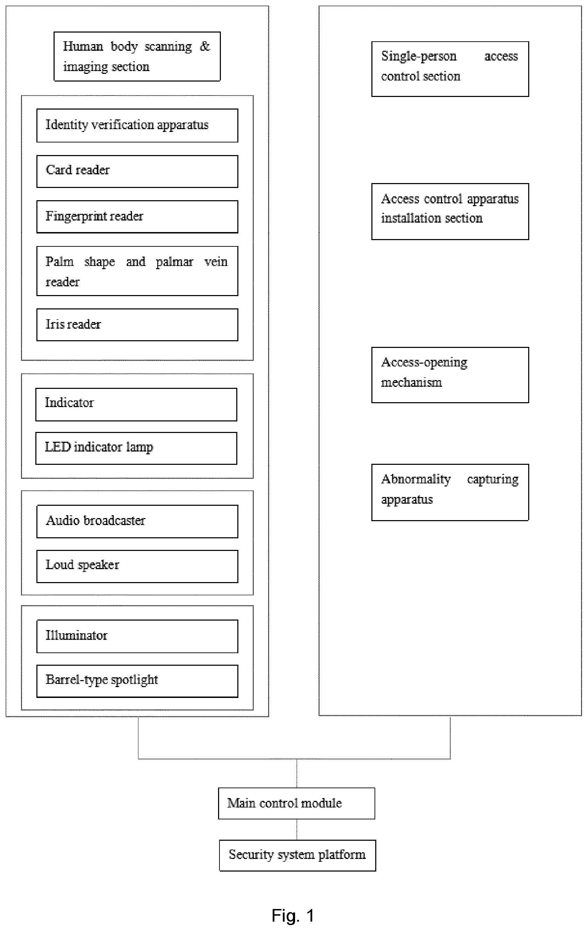

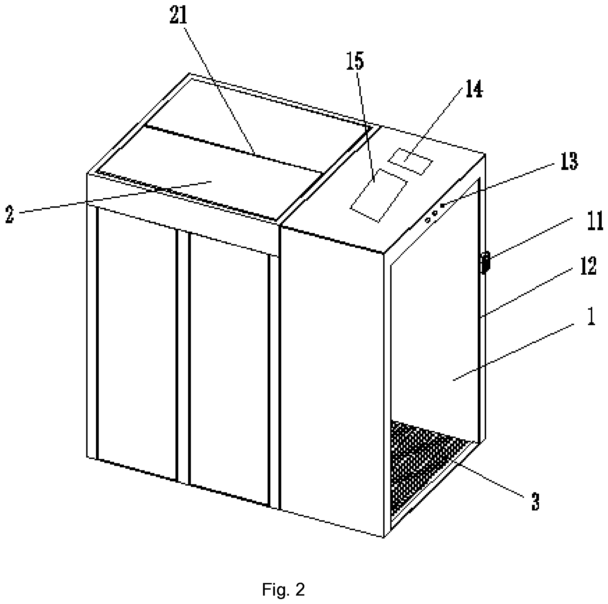

With reference to Fig. 1, a block schematic diagram of a structure of a security monitoring device according to an embodiment of the invention, and Fig. 2, a schematic view showing an overall structure of the security monitoring device according to an embodiment of the invention; the embodiment includes a box body provided therein with a human body scanning and imaging section 1 and a single person access control section 2 sequentially, wherein the human body scanning and imaging section 1 scans and detects a human body to obtain a human body image with a certain precision, and the human body image is compared with image information preset by a main control module to determine whether the person is qualified to pass; after the main control module determines the scanning result of the human body scanning and imaging section, the single person access control section allows the person to pass or stops the person from passing through a gate machine.

With continued reference to Figs. 1 and 2, the human body scanning and imaging section is provided with a magneto-optical image recognition and scanning module and a radioactivity detection module, wherein the magneto-optical image recognition and scanning module scans and detects a human body to generate a set of complete and clear images of the front and the back of the human body by utilizing the characteristics of electromagnetic waves between the middle infrared wave and the microwave in the electromagnetic wave spectrum, the imaging has a high resolution and can see underneath the clothes of the human body easily by utilizing, for example, terahertz electromagnetic waves; the shape and material information of the items underneath the clothes is obtained, and high-definition data image information is provided for the main control module. The radioactivity detection module employs an ionizing radiation instrument for detecting whether the person carries nuclear radiation substances or substances polluted by nuclear radiation, and provides radioactivity detection data to the main control module.

Specifically, according to the information sent by an identity recognition module, the magneto-optical image recognition and scanning module, and the radioactivity detection module, the main control module compares the information with preset determination conditions stored therein, automatically marks at a corresponding position at the human body image when finding out prohibited items, stops the person from passing, and asks the person to step back through an audio alert, in which case the person shall turn to manual inspection. If the main control module determines that the person is qualified to pass, an instruction of clear access is issued and sent to a machinery control module of the gate machine for implementation; after reception of information about whether the person passes successfully from the machinery control module of the gate machine, all the information about the person passing the security check to a security system platform. If the person is not qualified after the security check and not allowed to pass, the main control module also sends all the information to the security system platform, so that when the person turns to manual inspection, someone who is responsible for the manual inspection can see why the person cannot pass the control device of the unattended security check system detecting human bodies.

With continued reference to Figs. 1 and 2, the embodiment of the invention further includes an identity recognition module provided at the foremost end of the box body for confirming the identity of the person entering or exiting the security zone, activating the magneto-optical image recognition and scanning module at the same time, combining a result information output by the activated magneto-optical image recognition and scanning module with the identity information, and sending the same to the main control module. In the embodiment, the identity recognition can be achieved by any one or any combination(s) of a card swiping mode, a fingerprint mode, an iris recognition mode, and a face recognition method, and accordingly, by setting a card reader, a fingerprint reader, an iris reader and a face reader on the box body; however, a person skilled in the art would be able to select other devices having an identity verification function.

Specifically, the radioactivity detection module determines whether the person carries radioactive substances with radioactivity exceeding a threshold value by sensing, provides radioactivity detection data to the main control module, and generates an alarm when the radioactivity exceeds the threshold value; the embodiment sets different thresholds according to different use environments and scenarios. Specifically, in the embodiment of the invention, the magneto-optical image recognition and scanning module scans the human body through electromagnetic waves to form complete and clear images of the front and the back of the human body in the scanning process, in a specific configuration, the corresponding magneto-optical image recognition and scanning modules can be arranged on two sides of the inner sidewall of the box body, respectively, the two scanning modules work in parallel, with one scanning from top to bottom, and the other scanning from bottom to top. This embodiment uses, for example, terahertz electromagnetic waves for scanning and imaging. Comparison data are prestored in the main control module, and a determination reference model F (A, B, C, D, M) is established, wherein A represents a type of the item, B represents comparison parameters including image pigment, shape and material information, C represents an image pigment value at the same position in the image, D represents a shape of the scanned image, and M represents a material of the scanned item; the main control module sets the above determination reference database as a basis for comparison, wherein A-the type of the item can be set according to specific application scenarios, for example, in a nuclear enterprise, as a metal type, a non-metal type, a radiation type and a non-radiation type, and in greater details as a specific metal or a specific non-metal, or as types of daily life, production, and service according to usage of the item, the type of daily life being further defined as cups, tooth brush, etc., the type of production being defined as production tools and production materials, the type of service being further defined as service tools and portable tools, such as mobile phones and computers. Certain comparison parameters, including an image pigment, a shape, and a material, are set for the same reference data determination model, the scanned image can be determined according to the magneto-optical image recognition and scanning module, the pigment at any position can be subjected to comparison, and when the pigment detected in real time does not match with the reference pigment, the specific position is determined as the position to be checked; regarding the shape parameter, a shape change or a shape of a certain position is detected after imaging to basically determine the general type of the carried item, and the shape can be recorded as a three-dimensional size through a further detection; regarding the material, according to the embodiment, a certain material is determined by comparing electromagnetic wave penetration thereof with electromagnetic wave penetration of the reference material. According to the embodiment of the invention, by setting the pigment, direct decomposition and comparison are facilitated after imaging, and a high comparison precision is rendered; by setting the shape, the image can be conveniently obtained through electromagnetic waves; and by setting the material, specific items can be conveniently recognized in real time.

Specifically, when the human body and the item are scanned, the main control module sets a scanning and imaging matrix T (a, b, c, d, m), wherein a represents a type of the item to be detected in real time, b represents parameters for real-time comparison, including image pigment, shape and material information, c represents a real-time image pigment value at the same position in the image, d represents a shape of the image scanned in real time, and m represents a material of the real-time scanned object. The invention compares the real-time scanning and imaging matrix T (a, b, c, d, m) with the reference model F (A, B, C, D, M) to determine whether a difference exists as to the person, thereby determining whether the person carries preset prohibited items.

In particular, in the embodiment of the invention, security check shall be conducted not only when a person enters but also when the person exits some certain facility, such as a nuclear power plant, a nuclear facility factory, a nuclear military production unit, a military facility, and a high-tech security R and D unit, to prevent the person from taking out prohibited items. Therefore, the main control module of the invention further includes a specific identity information storage database, when a specific person enters for the first time, human body biological characteristics G, such as any one of fingerprint data, iris data, and facial data, of the specific person are collected as a unique identifier for determining the identity of the specific person; when the person enters, real-time image information T (a, b, c, d, m) is collected and compared with the reference model F (A, B, C, D, M), a first reference model T (G, A, B, C, D, M) is determined after the person is qualified; when the person exits, the scanning and imaging matrix information T (a, b, c, d, m) of the person is collected and compared with the reference model F (A, B, C, D, M), specific person imaging matrix information T (G, a, b, c, d, m) is generated after the person is qualified, and the imaging matrix information T is compared with the first reference model T to determine whether differences exist between entrance and exit.

With reference to Fig. 2, the single-person access control section of the embodiment is provided with a gate machine for ensuring that only one qualified person after security check can really pass; the person shall pass only after being qualified in the human body scanning and imaging section, the gate machine, taking the form of a speed gate, an AB-interlocking gate, or a full-height revolving gate, opens the access after receiving an instruction to allow the qualified person to pass from the main control module and provides feedback to the main control module as to whether the person really passes. Accordingly, infrared sensors or other sensors are arranged on two sides of the gate machine for sensing whether the person passes. In the embodiment of the invention, the real-time image information T (a, b, c, d, m) is collected and compared with the reference model F (A, B, C, D, M), and the gate machine opens the access for only one person to pass if a preset condition is met; the gate machine blocks the access to stop the person from passing if the preset condition is not met.

With reference to Fig. 2, an identity recognition module 11 is provided at a front end 12 of the box body in the human body scanning and imaging section 1 to read an access control card or personal biological characteristic information and determine the identity of a person to be checked; an audio broadcaster 14 at the top of a detection section of a magneto-optical scanning section for providing help and alerts in Chinese and English during the whole process; an illuminator 15 at the top of the detection section of the magneto-optical scanning section for providing illumination in the passage, and an indicator 13 at the top of an entrance of the magneto-optical scanning section and electrically connected with the system for indicating different stages and abnormal conditions in the recognition process and providing visual alert signals. The single-person access control section 2 is provided with an access control apparatus installation section 21 and the gate machine, the access control apparatus installation section 21 is located at the top of the access control section, and a dustproof and waterproof closure, a passage logic controller and a power module are provided therein; an abnormality capturing apparatus is further provided in the access control section for collecting images of abnormal conditions such as long-time retention in the passage and the like. An anti-slipping mat 3 is also provided on the passage.

With reference to Fig. 2, in the embodiment of the invention, the passage between the human body scanning and imaging section 1 and the one-person access control section 2 may be further provided with a blocking mechanism, such as a stopper rod or a structure similar to a gate machine actuator, as a result, the qualified person cannot step back, making sure only one person can pass.

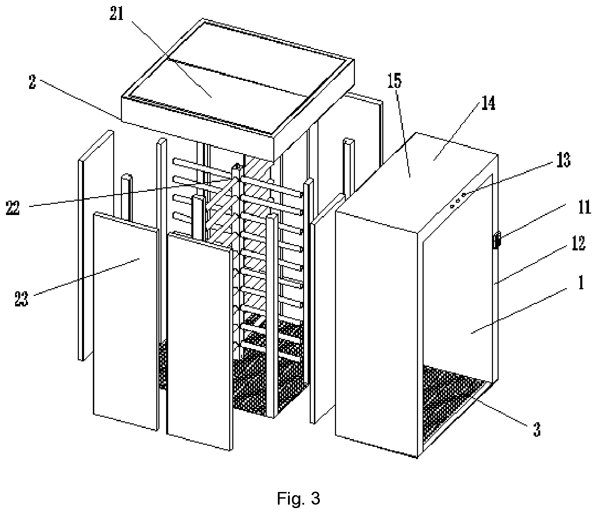

The magneto-optical image identification scanning module in the embodiment of the invention can be combined with many types of gates to adapt to different use environments, and Fig. 3 is a schematic view showing the overall structure of the security monitoring device according to a first embodiment of the invention; in the embodiment, the gate machine adopts the form of a cross revolving gate mechanism, as shown in Fig. 3, the human body scanning and imaging section 1 is disposed at the front end, the gate machine is disposed at the rear end, a passage is disposed between the human body scanning and imaging section 1 and the gate machine, when a person passes through the identity verification apparatus, the magneto-optical image recognition and scanning module is activated and starts scanning and detection, meanwhile, the gate machine is pre-started, and when the person is not qualified yet, the gate machine blocks the access, and after the person is qualified, the gate machine opens the access; the cross revolving gate mechanism revolves to allow only one person to pass through, and after the person passes through, the gate machine blocks the access again. Moreover, a blocking lever is provided between the gate machine and the human body scanning and imaging section 1, as a result, the qualified person cannot step back. In the embodiment, the cross revolving gate mechanism is disposed at the center position of the access control section, its four quadrants being compact in design, thereby realizing spatial control of the number of passengers.

Specifically, in the embodiment, a plurality of sets of the detection system can be provided for simultaneous usage, and a manual security check passage is also provided, when suspicious items are detected by the detection system but cannot be accurately determined through image comparison, the security check is carried out manually, and after the suspicious items are excluded, the person enters the detection system again to pass through.

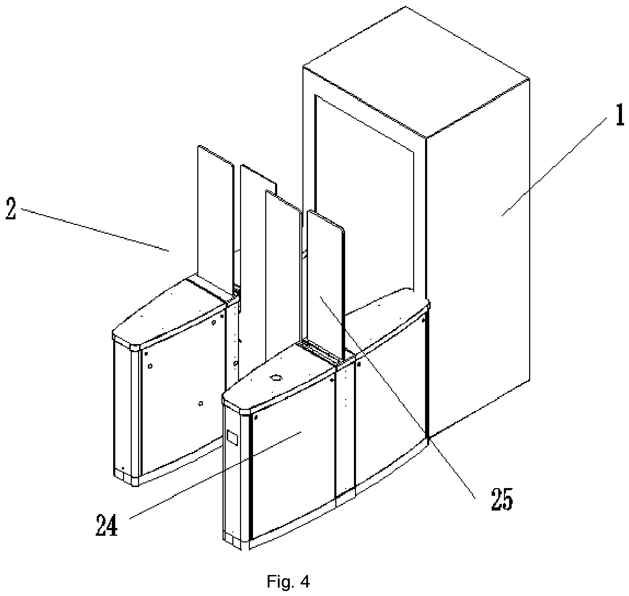

With reference to Fig. 4, a schematic view showing the overall structure of the security monitoring device according to a second embodiment of the invention; in the embodiment, the gate machine adopts the form of an AB-interlocking gate, the human body scanning and imaging section 1 is disposed at the front end, the gate machine is disposed at the rear end, a passage is disposed between the human body scanning and imaging section 1 and the gate machine, when a person passes through the identity verification apparatus, the magneto-optical image recognition and scanning module is activated and starts scanning and detection, meanwhile, the gate machine is pre-started, and when the person is not qualified yet, the gate machine blocks the access, and after the person is qualified, the gate machine opens the access; an interlocking gate 25 is provided on a gate machine body 24, the interlocking gate 25 opens to allow only one person to pass through, and after the person passes through, the gate machine blocks the access again. Moreover, a blocking lever is provided between the gate machine and the human body scanning and imaging section 1, as a result, the qualified person cannot step back; in this embodiment, a blocking lever similar to an entrance guard can be provided, and the entrance guard lever can be swung up and down to allow a person to pass or stop the person.

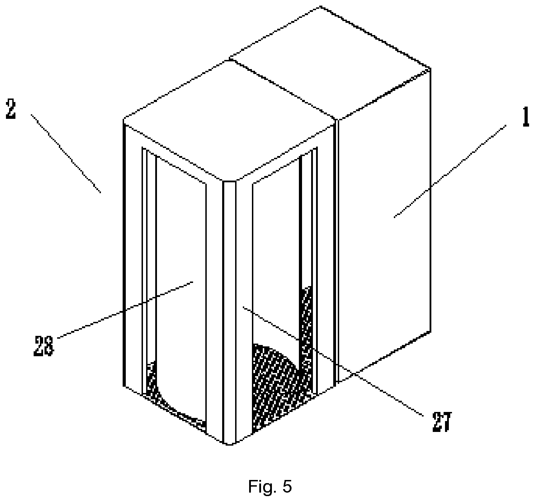

With reference to Fig. 5 a schematic view showing the overall structure of the security monitoring device according to a third embodiment of the invention; the embodiment adopts the form of a full-height revolving gate, the human body scanning and imaging section 1 is disposed at the front end, the gate machine is disposed at the rear end, a passage is disposed between the human body scanning and imaging section 1 and the gate machine, when a person passes through the identity verification apparatus, the magneto-optical image recognition and scanning module is activated and starts scanning and detection, meanwhile, the gate machine is pre-started, and when the person is not qualified yet, the gate machine blocks the access, and after the person is qualified, the gate machine opens the access; a revolving gate 28 is provided on a gate machine support 27, the revolving door 28 revolves to open, allowing only one person to pass through, and after the person passes through, the gate machine blocks the access again. Moreover, a blocking lever is provided between the gate machine and the human body scanning and imaging section 1, as a result, the qualified person cannot step back.

It will be apparent to those skilled in the art that various modifications and variations can be made to the invention without departing from the spirit or scope of the invention. Thus, it is intended that the invention cover the modifications and variations of this invention provided they come within the scope of the appended claims and their equivalents.

## Claims

1. A control device of an unattended security check system detecting human bodies, **characterized by** comprising:
a box body, provided therein with a human body scanning and imaging section and a single person access control section sequentially, wherein
the human body scanning and imaging section scans and detects a human body of a person entering the device with electromagnetic waves and obtains a human body image of the person, and the human body image is compared with image information preset by a main control module to determine whether the person is qualified to pass;
after the main control module determines the scanning result of the human body scanning and imaging section, the single person access control section allows the person to pass or stops the person from passing through a gate machine;
the human body scanning and imaging section includes a magneto-optical image recognition and scanning module, the magneto-optical image recognition and scanning module scans and detects a human body to generate the human body image, including complete and clear images of the front and the back of the human body, by utilizing the characteristics of electromagnetic waves between the middle infrared wave and the microwave in the electromagnetic wave spectrum, the human body image is an X-ray image and contains information including the shape and material of items underneath clothes, and the information of the X-ray image is sent to the main control module;
the main control module compares the information with preset determination conditions stored therein, automatically marks at a corresponding position at the human body image when finding out prohibited items, stops the person from passing, and asks the person to step back through an audio alert; if the main control module determines that the person is qualified to pass, an instruction of clear access is issued and sent to a machinery control module of the gate machine for implementation; after reception of information about whether the person passes successfully from the machinery control module of the gate machine, all the information about the person passing the security check to a security system platform.

2. The control device of an unattended security check system detecting human bodies according to claim 1, **characterized in that** the human body scanning and imaging section is provided with a radioactivity detection module, the radioactivity detection module employs an ionizing radiation instrument for detecting whether the person carries nuclear radiation substances or substances polluted by nuclear radiation, and provides radioactivity detection data to the main control module;
the radioactivity detection module determines whether the person carries radioactive substances with radioactivity exceeding a threshold value by sensing, provides radioactivity detection data to the main control module, and generates an alarm when the radioactivity exceeds the threshold value.

3. The control device of an unattended security check system detecting human bodies according to claim 2, **characterized in that** the magneto-optical image recognition and scanning modules can be arranged on two sides of an inner sidewall of the box body, respectively, the two scanning modules work in parallel, with one scanning from top to bottom, and the other scanning from bottom to top.

4. The control device of an unattended security check system detecting human bodies according to claim 2, **characterized in that** comparison data are prestored in the main control module, and a determination reference model F (A, B, C, D, M) is established, wherein A represents a type of the item, B represents comparison parameters including image pigment, shape and material information, C represents an image pigment value at the same position in the image, D represents a shape of the scanned image, and M represents a material of the scanned item; the main control module sets the above determination reference database as a basis for comparison, wherein A-the type of the item is set as a metal type, a non-metal type, a radiation type, and a non-radiation type according to specific application scenarios, or as types of daily life, production, and service according to the usage of the item, the type of service being further defined as a service tool and a portable tool.

5. The control device of an unattended security check system detecting human bodies according to claim 4, **characterized in that** certain comparison parameters, including an image pigment, a shape and a material, are set for the same reference data determination model, the scanned image can be determined according to the magneto-optical image recognition and scanning module, the pigment at any position can be subjected to comparison, and when the pigment detected in real time does not match with the reference pigment, the specific position is determined as the position to be checked; regarding the shape parameter, a shape change or a shape of a certain position is detected after imaging to basically determine the general type of the carried item, and the shape can be recorded as a three-dimensional size through a further detection; regarding the material, the main control module determines a certain material by comparing electromagnetic wave penetration thereof with electromagnetic wave penetration of the reference material.

6. The control device of an unattended security check system detecting human bodies according to claim 5, **characterized in that** when the human body and the item are scanned, the main control module sets a scanning and imaging matrix T (a, b, c, d, m), wherein a represents a type of the item to be detected in real time, b represents parameters for real-time comparison, including image pigment, shape and material information, c represents a real-time image pigment value at the same position in the image, d represents a shape of the image scanned in real time, and m represents a material of the real-time scanned object; the main control module compares the real-time scanning and imaging matrix T (a, b, c, d, m) with the reference model F (A, B, C, D, M) to determine whether a difference exists as to the person, thereby determining whether the person carries preset prohibited items.

7. The control device of an unattended security check system detecting human bodies according to claim 6, **characterized by** further comprising an identity recognition module provided at the foremost end of the box body for confirming the identity of the person entering or exiting the security zone, activating the magneto-optical image recognition and scanning module at the same time, combining a result information output by the activated magneto-optical image recognition and scanning module with the identity information, and sending the same to the main control module;
the identity recognition module employs any one of a card swiping mode, a fingerprint mode, an iris recognition mode, and a face recognition mode.

8. The control device of an unattended security check system detecting human bodies according to claim 7, **characterized in that** the main control module further comprises a specific identity information storage database, when a specific person enters for the first time, human body biological characteristics G, such as any one of fingerprint data, iris data, and facial data, of the specific person are collected as a unique identifier for determining the identity of the specific person; when the person enters, real-time image information T (a, b, c, d, m) is collected and compared with the reference model F (A, B, C, D, M), a first reference model T (G, A, B, C, D, M) is determined after the person is qualified; when the person exits, the scanning and imaging matrix information T (a, b, c, d, m) of the person is collected and compared with the reference model F (A, B, C, D, M), specific person imaging matrix information T (G, a, b, c, d, m) is generated after the person is qualified, and the imaging matrix information T is compared with the first reference model T to determine whether differences exist between entrance and exit.

9. The control device of an unattended security check system detecting human bodies according to claim 7, **characterized in that** the human body scanning and imaging section is disposed at a front end, the gate machine is disposed at a rear end, a passage is provided between the human body scanning and imaging section and the gate machine, when the person passes through an identity recognition module, the magneto-optical image recognition and scanning module is activated to start scanning and detection, meanwhile, the gate machine is pre-started, when the person is not qualified yet, the gate machine blocks the passage, and after the person is qualified, the gate machine opens the access;
the gate machine is any one of a speed gate, an AB-interlocking gate, and a full-height revolving gate.

10. The control device of an unattended security check system detecting human bodies according to claim 7, **characterized in that** the human body scanning and imaging section further comprises an audio broadcaster at the top of a detection section of a magneto-optical scanning section for providing help and alerts in Chinese and English during the whole process; an illuminator at the top of the detection section of the magneto-optical scanning section for providing illumination in the passage, and an indicator at the top of an entrance of the magneto-optical scanning section and electrically connected with the system for indicating different stages and abnormal conditions in the recognition process and providing visual alert signals.
